# FASCICULE DE BREVET EUROPEEN

(11) **EP 2 373 711 B1**
(45) Date de publication et mention de la délivrance du brevet: **17.06.2015**
(21) Numéro de dépôt: 09799665.6
(22) Date de dépôt: 08.12.2009
(51) Int. Cl.: C08F 279/00, C08F 283/00, H01M 8/10, C08F 290/06

(54) **NOUVEAUX RESEAUX INTERPENETRES DE POLYMERES ET LEURS APPLICATIONS**
NEUE INTERPENETRIERENDE POLYMERNETZWERKE UND VERWENDUNGEN DAVON
NOVEL INTERPENETRATING POLYMER NETWORKS AND USES THEREOF

(30) Priorité: 09.12.2008 FR 0806890
(43) Date de publication de la demande: 12.10.2011
(73) Titulaire: Commissariat à l'Énergie Atomique et aux Énergies Alternatives, 75015 Paris (FR); Centre National de la Recherche Scientifique, 75016 Paris (FR); Université de Cergy-Pontoise, 95011 Cergy-Pontoise Cedex (FR); Ecole Nationale Supérieure de Chimie de Montpellier, 34296 Montpellier Cedex 5 (FR); Université de Savoie, 73000 Chambery (FR)
(72) Inventeur: MORIN, Arnaud, F-38100 Grenoble (FR); AMEDURI, Bruno, F-34000 Montpellier (FR); CHIKH, Linda, F-78600 Maisons-Laffite (FR); FICHET, Odile, F-78300 Poissy (FR); GEBEL, Gérard, F-38120 Saint Egreve (FR); MERCIER, Régis, F-69540 Irigny (FR)
(74) Mandataire: Majidi, Assieh
(86) Numéro de dépôt international: PCT/FR2009/001401
(87) Numéro de publication internationale: WO 2010/066964

(56) Documents cités:
- WO-A-98/22989
- US-A1- 2005 112 434
- US-B1- 7 176 247
- YAMAGUCHI ET AL: JOURNAL OF MEMBRANE SCIENCE, vol. 214, 2003, pages 283-292, XP002533229 cité dans la demande

## Description

L'invention a pour objet de nouveaux réseaux interpénétrés de polymères, leur procédé de fabrication et leur utilisation, notamment pour fabriquer des membranes de pile à combustible.

Les piles à combustibles trouvent de nombreuses applications en substitution des batteries habituelles dans de nombreux dispositifs électriques. Les coeurs de pile à combustible de type PEMFC (Proton Exchange Membrane Fuel Cell ou pile à combustible à membrane échangeuse de protons) et DMFC (Direct Methanol Fuel Cell ou pile à combustible au méthanol direct), également dénommés AME (Assemblages Membrane/Electrodes) sont constitués d'une membrane électrolyte polymère et de deux électrodes (anode et cathode) disposées sur chaque face de cette membrane.

Les AME permettent de convertir l'énergie chimique d'une réaction en énergie électrique, par exemple celle de formation de l'eau à partir d'hydrogène (H₂) pour les PEMFC ou de méthanol pour les DMFC et d'oxygène (O₂) gazeux.

La membrane des piles à combustibles PEMFC et DMFC doit remplir 3 fonctions :
- Conduction des espèces ioniques et plus spécifiquement des protons,
- Séparation des réactifs anodique et cathodique,
- Isolation électronique.

Afin d'assurer l'ensemble de ces fonctions, la membrane doit être un bon conducteur protonique, avec une conductivité comprise entre 5x10⁻² et 10⁻¹ S/cm dans les conditions de fonctionnement. Elle doit être peu perméable aux réactifs (H₂ et O₂ dans le cas de la PEMFC ou Méthanol et O₂ dans le cas des DMFC), et de préférence avoir une perméabilité inférieure à 10⁻¹⁴ mol/(m.s.Pa) pour chacun des réactifs dans les conditions de fonctionnement. Enfin ce doit être un bon isolant électronique.

Par ailleurs, la membrane doit être stable (chimiquement, physiquement) dans les conditions de fonctionnement de la pile à combustible. Les critères influençant la stabilité des matériaux sont la température, la quantité d'eau, l'activité des réactifs (notamment H₂, ou O₂ dans le cas des PEMFC), le potentiel électrique (V) et le pH. Les conditions les plus extrêmes qui peuvent être observées dans une pile à combustible de type PEMFC sont :
- pH de 0 à 1,
- température : 120°C,
- 100% d'humidité relative,
- Anode : PH₂= 4bars, Vₐ=0 V,
- Cathode : PO₂= 4bars, V_{c}=1,2 V.

Enfin, ce matériau doit être peu coûteux, non toxique et facilement manipulable.

A l'heure actuelle, les piles à combustible à membrane échangeuse de protons (PEMFC) les plus avancées, qu'elles soient disponibles commercialement ou intégrées dans des démonstrateurs, sont réalisées avec des électrolytes polymères perfluorosulfonés de types Nafion®, Hyflon®. En effet, ce type de polymère est celui qui présente à la fois les meilleures performances et la plus grande durée de vie. Toutefois, les performances atteintes par ces membranes ne sont pas encore suffisantes, et ce, quelles que soient les applications (portable, stationnaire, transport).

L'application dans le domaine du transport est la plus contraignante du point de vue du cahier des charges (coût, température d'utilisation, performance, durée de vie). Idéalement, pour une application dans l'automobile, il faudrait disposer d'une PEMFC fonctionnant entre -20°C et 120°C en gaz faiblement humidifiés (entre 0 et 50% d'humidité relative) et ayant une durée de vie d'au moins 5000 heures avec 10 000 cycles marche/arrêt. Or, les membranes perfluorosulfonées, du fait de leur structure physique et chimique, ne présentent pas les propriétés requises pour être utilisées dans ces conditions. En effet, leur température d'utilisation est limitée à 80°C. Au-dessus de cette température, les propriétés mécaniques de ces membranes s'effondrent et, en gaz faiblement humidifiés, leur conductivité protonique diminue. Par ailleurs, même à 80°C leur durée de vie n'excède pas à l'heure actuelle 2000 heures, en raison des attaques chimiques que subissent ces membranes par les radicaux libres générés dans la pile mais surtout à cause de la fatigue mécanique engendrée par les successions de gonflement/dégonflement lors des cycles marche/arrêt. Enfin, du fait de leur méthode de synthèse et de leur composition chimique, leur fabrication reste trop onéreuse pour cette application.

Ainsi, les électrolytes pour PEMFC font l'objet d'intenses recherches dans le monde depuis plusieurs années dans l'objectif de réduire leur coût et/ou d'augmenter leur durée de vie ou leurs performances ou leur température d'utilisation. Or, il s'avère difficile, voire impossible, d'atteindre simultanément l'ensemble de ces objectifs avec les voies de recherches suivies actuellement qui sont basées sur différentes améliorations des électrolytes polymères existants par des modifications physiques (addition de composés inorganiques, mélanges de polymères, etc..) ou chimiques (modification de la structure chimique du polymère pour augmenter la température de transition vitreuse).

Les membranes polymères hydrocarbonées ont une durée de vie en pile à combustible plus limitée que les membranes perfluorosulfonées. En effet, elles sont beaucoup plus sensibles aux dégradations chimiques par attaque radicalaire et présentent des propriétés mécaniques faibles, notamment en raison d'un gonflement excessif. En effet, pour présenter une conductivité protonique similaire à celle des membranes perfluorosulfonées, elles doivent avoir une capacité d'échange ionique (CEI) élevée, ce qui induit des gonflements importants en présence d'eau et une grande fragilité à l'état sec.

Les membranes composites ou hybrides à base de polymères perfluorosulfonés ne résolvent pas le problème du coût de l'électrolyte.

Les membranes composites ou hybrides à base de polymères non conducteurs (PBI, PVDF...) dopés par des composés organiques (liquides ioniques...) ou inorganiques conducteurs protoniques (acide phosphorique, hétéropolyacides...) présentent des problèmes d'élution et/ou sont limitées à des températures de fonctionnement supérieures à 100°C. Par ailleurs, il est difficile de réaliser des couches actives adaptées par manque de liant conducteur protonique de même nature que celui de la membrane.

La situation actuelle est donc qu'aucune membrane ne répond aux conditions d'utilisation pour l'application automobile.

L'invention concerne plus particulièrement la réalisation d'une membrane constituée d'un premier réseau de polymère conducteur cationique (polymère conducteur cationique réticulé et nommé A par la suite) et d'un second réseau de polymère fluorocarboné (réticulé et nommé B par la suite). Ces deux réseaux n'étant pas liés entre eux par des liens covalents, on parle de réseaux interpénétrés de polymères (RIP).

Les réseaux interpénétrés de polymères (RIP) sont connus de longue date, et certains ont été décrits pour leur utilisation dans la fabrication de membranes de piles à combustibles.

La demande internationale WO2005/003237 décrit des RIP à base de silicones et mentionne l'application comme membrane pour pile à combustible. Le RIP y est constitué d'un réseau à base d'une silicone qui peut être fluorée. Le RIP est réalisé par imprégnation, à l'aide d'un solvant ou par voie supercritique des monomères précurseurs du second réseau dans la silicone réticulée ou non. Les monomères sont ensuite polymérisés/réticulés pour réaliser le second réseau. Ainsi, l'élaboration du polymère (non réticulé) ou réseau (réticulé) A se fait une fois le premier polymère (non réticulé) ou réseau (réticulé) formé.

Toutefois, les silicones présentent l'inconvénient de n'être pas stables dans les conditions de fonctionnement des piles à combustible. En outre, la formation des deux réseaux de façon successive présente des inconvénients : en effet, il est difficile de parvenir à imprégner le réseau déjà formé avec des monomères du second réseau. Il est possible de le faire par voie supercritique comme c'est envisagé dans ce document mais cette voie de synthèse est lourde à mettre en place. Et seule une formation simultanée des deux réseaux permet d'obtenir une répartition nanométrique des deux phases dans le cas des polymères de l'invention.

Le document US-7,176,247 décrit un RIP destiné à une application DMFC, ce RIP étant constitué d'un premier réseau conducteur protonique de copolymère AMPS (acide 2-acrylamido-2-méthylpropanesulfonique) sulfoné ou phosphoné et d'un second réseau de PVA (alcool polyvinylique). Ces deux réseaux ne sont pas stables dans les conditions d'utilisation de la pile à combustible. Les deux réseaux ne sont pas synthétisés simultanément selon une synthèse *in-situ.* Enfin, la synthèse décrite dans cet art antérieur se déroule dans un mélange d'eau et d'alcool et n'est pas transposable pour réaliser les RIP qui font l'objet de la présente invention.

Le document WO 98/22989 décrit des membranes de piles à combustible composées d'acide polystyrène sulfonique et de poly(fluorure de vinylidène). Elles sont préparées par un procédé selon lequel on prépare tout d'abord une matrice inerte de PVDF puis on imprègne cette matrice avec le mélange de styrène et de DVB. La polymérisation du réseau styrène/DVB permet son interpénétration avec la matrice de PVDF. Elle est suivie d'une étape de sulfonation. Toutefois, le PVDF n'est pas réticulable, aussi la matrice de PVDF ne constitue pas un « réseau de polymère » au sens de l'invention. Le procédé enseigné par WO 98/22989 ne permet d'accéder qu'à un semi-RIP (réseau interpénétré avec un polymère).

Le document T. Yamaguchi et al., Journal of Membrane Science, 214, 2003, 283-292 décrit une méthode pour réaliser des membranes RIP échangeuses de cation. Le réseau A est créé dans une membrane poreuse réticulée (réseau B). Dans cet art antérieur, la membrane poreuse constituée d'un réseau de polyéthylène (CLPE) est imprégnée avec du poly(acide tert-butyl acrylamide sulfonique) (PATBS) qui est ensuite réticulé. Il est possible de remplacer le CLPE par un polymère fluoré réticulé ou non et le PATBS par un ionomère échangeur de cation contenant des groupes aromatiques. Toutefois, la méthode d'élaboration des deux réseaux décrite dans cet art antérieur n'est pas simultanée et n'est pas réalisée *in-situ.* De plus, la structure physique du RIP obtenu avec la méthode décrite dans cet art antérieur n'est pas à l'échelle de quelques nanomètres.

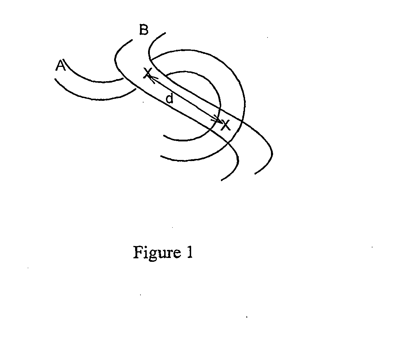

En effet, on sait caractériser la distance entre deux RIP par la mesure de la distance minimale entre deux noeuds successifs. Un noeud peut être défini comme le lieu où les deux réseaux se croisent (cf figure 1, qui illustre deux réseaux A et B se croisant en deux noeuds successifs marqués X séparés par une distance d). Cette distance peut être mesurée par différentes méthodes bien connues de l'homme du métier comme :
- la diffusion aux petits angles de neutrons ou de rayons X,
- la microscopie électronique à transmission (TEM),
- la miscroscopie à force atomique (AFM).

Et dans l'art antérieur, cette distance est supérieure à 50 nm.

Dans T. Yamaguchi *et al.,* la morphologie du matériau est imposée par celle du réseau B. Par ailleurs, la méthode décrite dans cet art antérieur permet uniquement d'obtenir un matériau sous la forme d'une membrane contrairement à la méthode de l'invention. Enfin, ce procédé, s'il était appliqué aux polymères utilisés dans l'invention présenterait des difficultés de mise en oeuvre importantes : en effet, il est difficile d'imprégner une membrane poreuse fluorée très hydrophobe avec des monomères précurseurs hydrophiles. Ceci demande plusieurs étapes et laisse souvent une porosité résiduelle.

L'invention a pour premier objet un réseau interpénétré de polymères, comprenant :
- un premier réseau de polymère conducteur cationique réticulé et nommé A formé de monomères dont au moins un contient au moins un groupe aromatique fonctionnalisé par au moins un groupe échangeur de cation.
- un second réseau de polymère fluorocarboné réticulé et nommé B formé de monomères dont au moins un contient au moins un groupement fluoré (R_{F}).
- Par réseau de polymère on entend une structure polymérique tridimensionnelle résultant de la copolymérisation d'au moins deux monomères.

Avantageusement, le réseau A résulte de la copolymérisation d'au moins deux monomères dont l'un comporte au moins un groupement aromatique et au moins un groupement échangeur de cation, comme par exemple un groupement imidazolium, ou un groupement acide, tel qu'un acide carboxylique (COOH), un acide phosphonique (PO₃H), un acide sulfonique (SO₃H). Les monomères utilisés pour construire le réseau A peuvent contenir des groupements fluorés (F).

### - Formation du réseau A

Le réseau A peut être construit en utilisant :
1/ un premier monomère avec au moins un cycle aromatique et deux fonctions polymérisables FP1 et sur au moins l'un des cycles aromatiques au moins un groupe échangeur de cation de type imidazolium ou acide carboxylique (COOY), acide phosphonique (PO₃Y) ou, de préférence, acide sulfonique (SO₃Y), où Y est choisi parmi H, Li, Na, K, HNR₃ où R représente un groupe alkyle comprenant 1 à 5 atomes de carbone.
2/ un second monomère comprenant au moins deux fonctions polymérisables FP2 susceptibles de réagir avec les fonctions FP1 du premier monomère pour former une liaison covalente.

Les fonctions FP1 et FP2 peuvent être identiques ou différentes.

Le réseau peut être construit à partir de monomères supplémentaires comportant des fonctions polymérisables FP1 ou FP2, ces monomères supplémentaires venant moduler les propriétés des premier et second monomères.

Le réseau A peut avoir comme structure chimique générale celle des polyarylènes ou des polyarylènes éther ou polyarylènes sulfite, fluorés ou non, de type polysulfone, polysulfite sulfone, polyimide, polyquinoxaline, polyquinoléine, polyparaphénylène, polybenzimidazole, polyéthercétone, polyéthersulfone, polyétherimide, fonctionnalisés avec des groupes échangeurs de cation de type imidazolium ou acide carboxylique (COOH) ou phosphonique (PO₃H) ou sulfonique (SO₃H).

On définit le réticulant comme le composé de plus haute fonctionnalité. Le taux de réticulant pour un réseau donné est le nombre de moles de molécule de fonctionnalité la plus élevée rapporté au nombre de moles de précurseurs servant à constituer le réseau.

Le réseau A confère au matériau ses propriétés d'échange cationique. Le taux de réticulant dans le réseau A est compris entre 0,1 et 100%, préférentiellement entre 25 et 50%. La capacité d'échange ionique du réseau A est supérieure à 0,5 mmole/g, et de préférence supérieure à 1 mmole/g.

De façon plus précise, lorsque le réseau A est construit à partir de précurseurs fluorovinyléther, on choisit préférentiellement un taux de réticulant compris entre 30 et 50 %. Et lorsque le réseau A est construit à partir de précurseurs diamine sulfonée, on choisit préférentiellement un taux de réticulant compris entre 25 et 50 %.

Le réseau B résulte de la copolymérisation d'au moins deux monomères dont l'un comporte au moins un groupement fluoré. Avantageusement, il contient des groupes CFₙ avec n=1, 2 ou 3. On peut prévoir qu'au moins l'un des monomères du réseau B contient des groupes aromatiques.

### - Formation du réseau B

Le réseau B peut être construit en utilisant :
1/ un premier monomère comprenant des groupements CFₙ avec n=1 à 3 comprenant au moins deux fonctions polymérisables FP3,
2/ un second monomère comprenant au moins deux fonctions polymérisables FP4, susceptibles de réagir avec les fonctions FP3 du premier monomère pour former une liaison covalente.

Les fonctions FP3 et FP4 peuvent être identiques ou différentes.

Le réseau peut être construit à partir de monomères supplémentaires comportant des fonctions polymérisables FP3 ou FP4, ces monomères supplémentaires venant moduler les propriétés des premier et second monomères.

Les fonctions polymérisables FP1 et FP2 sont choisies pour réagir ensemble suivant un mécanisme différent de celui choisi pour FP3 et FP4, de façon à éviter une copolymérisation des deux réseaux.

Le réseau B peut avoir comme structure chimique générale celle des polymères fluorocarbonés de type polytétrafluoroéthylène, polyfluorure de vinylidène, polychlorotrifluoroéthylène, copolymères poly(éthylène-alt-chlorotrifluoroéthylène), poly(tétrafluoroéthylène-co-hexafluoropropène) ou FEP, copolymères poly(éthylène-alt-tétrafluoroéthylène) ou polyarylène fluorés.

Ce réseau permet d'ajuster les propriétés mécaniques des membranes et d'améliorer la stabilité chimique de l'ionomère vis-à-vis de l'hydrolyse et de l'oxydation. Le taux de réticulant du réseau B est compris entre 0,1 et 100%, préférentiellement entre 1 et 100%.

De façon plus précise, lorsque le réseau B est construit à partir de précurseurs diépoxyde, on choisit préférentiellement un taux de réticulant compris entre 25 et 50 %. Et lorsque le réseau B est construit à partir de précurseurs monoacrylate ou monométhacrylate, on choisit préférentiellement un taux de réticulant compris entre 1 et 99 %, et dans ce cas le réticulant est choisi parmi les monomères comprenant au moins deux fonctions acrylate ou méthacrylate. Et lorsque le réseau B est construit à partir de précurseurs diacrylate ou diméthacrylate, le monomère est réticulant, on a 100% de réticulant.

Avantageusement, la proportion pondérale du réseau A dans le RIP de l'invention est comprise entre 50 et 80 % par rapport à l'ensemble des deux réseaux A et B.

Certains monomères du réseau A possèdent un ou plusieurs groupes aromatiques ayant au moins une fonction échangeuse de cation, par exemple de type imidazolium ou acide. Le réseau A confère donc au matériau ses propriétés d'échange cationique et le réseau B permet d'ajuster ses propriétés mécaniques et d'améliorer la résistance du réseau A aux dégradations chimiques et électrochimiques, telles que l'hydrolyse ou l'oxydation. Cette membrane est plus spécialement destinée à l'application PEMFC lorsque le réseau A est conducteur protonique.

L'élaboration de RIP représente le seul mode possible d'association de polymères réticulés, c'est à dire la seule voie d'élaboration d'un mélange de polymères qui soit stable dans le temps et ne conduise pas à un matériau anisotrope. Cette particularité est liée au mode de synthèse même du matériau :
- la synthèse *in situ* simultanée : à partir d'un mélange homogène des précurseurs des réseaux A et B (monomères et/ou polymères fonctionnalisés) on construit un réseau tridimensionnel d'un polymère à l'intérieur d'un autre réseau, tridimensionnel lui aussi, par polymérisation et/ou réticulation simultanée des deux réseaux.

Lorsqu'il est impossible d'obtenir un mélange homogène de tous les précurseurs on peut être amené à recourir à l'utilisation d'un solvant. En outre, il est nécessaire de faire appel à des modes de polymérisation et/ou de réticulation différents pour constituer les deux réseaux A et B partenaires, afin d'éviter la formation d'un réseau copolymère ou co-réseau.

Lors de cette synthèse, les deux réseaux de polymères sont enchevêtrés mais restent indépendants, c'est-à-dire sans liaison covalente entre eux puisque les deux réactions de réticulation sont différentes. La morphologie des RIP est généralement décrite comme celle de deux phases co-continues sur l'ensemble du matériau, dont la taille des domaines dépend du degré d'interpénétration des deux réseaux. Et dans les RIP de l'invention la distance locale entre deux noeuds successifs peut descendre jusqu'à 10 nm ou moins. Cette architecture présente généralement, sans que cela soit toujours clairement expliqué, une résistance accrue aux agressions tant chimiques que physiques par rapport aux réseaux simples d'homopolymères correspondants.

La stratégie de préparation *in situ* simultanée est la plus simple, théoriquement, à mettre en oeuvre, puisqu'elle consiste à déclencher en même temps les réactions de polymérisation et/ou de réticulation à partir d'un mélange homogène de tous les réactifs, ce qui n'implique pas, bien entendu que les réactions de formation des deux réseaux se déroulent à la même vitesse. Mais selon une variante de cette stratégie on peut prévoir, par exemple, de retarder le déclenchement de la réaction ayant la cinétique la plus rapide pour optimiser l'interpénétration des deux réseaux. L'une des caractéristiques du mode de préparation *in situ* simultané est qu'aucun des deux réseaux n'est totalement construit avant que la construction de l'autre n'ait commencé.

Une condition nécessaire à l'obtention des RIP est que les réactions de polymérisation menant à la formation des réseaux A et B doivent être différentes afin que les deux réseaux ne réticulent pas entre eux.

L'invention a donc encore pour objet un procédé de fabrication d'un réseau interpénétré de polymères comprenant un réseau A et un réseau B tels que décrits ci-dessus, ce procédé comprenant :
(i) au moins une étape au cours de laquelle on mélange les monomères précurseurs du réseau A et les monomères précurseurs du réseau B,
(ii) au moins une étape au cours de laquelle on déclenche la polymérisation de A et la polymérisation de B.

Les monomères ayant été choisis de façon à former des réseaux de polymères réticulés, les deux réseaux polymériques se construisent simultanément, de façon indépendante, c'est-à-dire sans formation de liaison covalente entre les deux réseaux, et en étant enchevêtrés l'un dans l'autre.

On peut prévoir entre les étapes (i) et (ii), le dépôt du mélange dans un moule de façon à donner au réseau RIP la forme et les dimensions voulues en fonction de l'usage qui doit en être fait. Par exemple, cette étape peut consister en un dépôt sur une plaque, telle qu'une plaque de verre, à l'aide d'un outil permettant d'obtenir un dépôt sensiblement plan, de façon à obtenir une membrane.

Suivant le choix des monomères, on peut soit les mélanger directement entre eux, soit utiliser un solvant pour permettre leur mélange. Dans le cas où l'on utilise un solvant, celui-ci est éliminé après formation du RIP par des méthodes connues de l'homme du métier.

Par rapport aux réseaux de l'art antérieur, les RIP de l'invention ont pour avantage : une distance entre les réseaux de polymères A et B inférieure ou égale à 40 nm, avantageusement inférieure à 20 nm, et encore plus préférentiellement inférieure à 10 nm. Cette distance peut être mesurée par l'une des méthodes suivantes :
- la diffusion aux petits angles de neutrons ou de rayons X,
- la microscopie électronique à transmission (TEM),
- la miscroscopie à force atomique (AFM).

Des protocoles de mise en oeuvre de ces méthodes sont décrits dans : B. Kim et al., Journal of Membrane Science 250 (2005) 175-182; N. Takimoto et al., Journal of Power Sources 194 (2009) 662-667 D.Loveday et al., Macromolecules, 28 (1995) 7822-7830.

Et lorsque l'on dit que la distance entre les réseaux de polymères A et B est inférieure ou égale à 40 nm, cela signifie que par l'une des méthodes d'analyse énoncées ci-dessus, dont les résultats sont sensiblement identiques, on peut trouver dans le RIP au moins deux noeuds successifs distants d'au plus 40 nm.

Formation du réseau A : A titre d'exemple, des associations de monomères permettant de construire le réseau A sont décrites ci-dessous :
- Formation du réseau A par dimérisation de fonctions fluorovinyl éther :
   Le réseau A peut être réalisé par la dimérisation de fonctions fluorovinyl éther avec :
      1/ un premier monomère comprenant au moins un cycle aromatique et deux fonctions -O-CF=CF₂, et sur au moins l'un des cycles aromatiques au moins un groupe échangeur de cation de type imidazolium ou acide carboxylique (COOY), acide phosphonique (PO₃Y) ou, de préférence, acide sulfonique (SO₃Y), où Y est choisi parmi H, Li, Na, K, HNR₃ où R représente un groupe alkyle comprenant de 1 à 5 atomes de carbone.
      2/ un second monomère comprenant trois fonctions -O-CF=CF₂,
      3/ éventuellement un ou plusieurs autre monomères comprenant au moins deux fonctions -O-CF=CF₂.

La présence du troisième monomère dans la synthèse n'est pas indispensable. Il est utilisé pour ajuster la capacité d'échange ionique de la membrane. Le premier et le second monomère peuvent être utilisés seuls.

Exemples de premiers monomères : 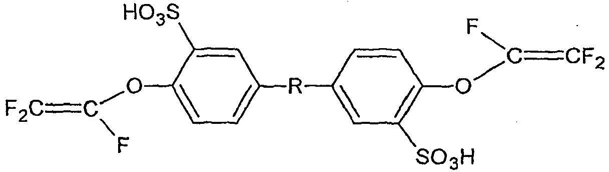 R représente 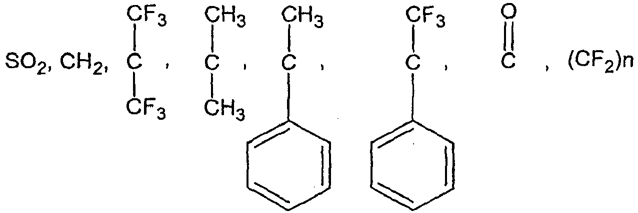 et 4 ≤ n ≤ 12

Exemples de seconds monomères : 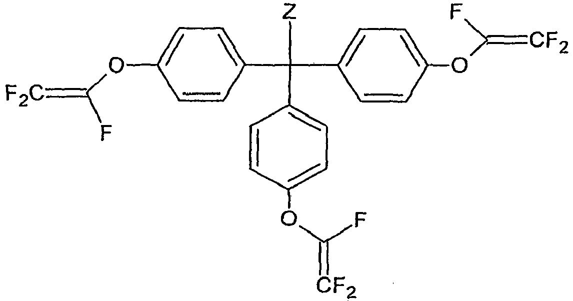 Z représente CH₃, CF₃, H

Exemples de troisièmes monomères : 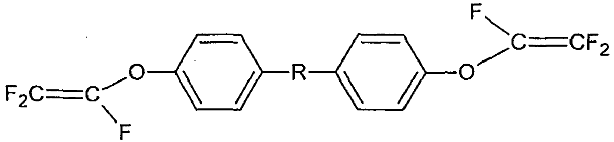 R représente 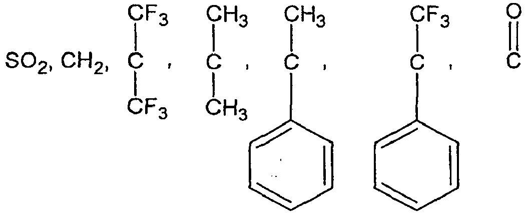
- Formation du réseau A par réaction de diamines sulfonées avec des monomères époxydés :
   Le réseau A peut être construit à partir de diamines sulfonées en utilisant :
      1- un premier monomère avec au moins un cycle aromatique et deux fonctions amine (NH₂), et sur au moins l'un des cycles aromatiques au moins un groupe échangeur de cation de type imidazolium ou acide carboxylique (COOY), acide phosphonique (PO₃Y) ou, de préférence, acide sulfonique (SO₃Y), où Y est choisi parmi H, Li, Na, K, HNR₃ où R représente un groupe alkyle comprenant 1 à 5 atomes de carbone.
      2- un second monomère comprenant deux groupes époxyde susceptibles de réagir avec les fonctions amine du premier monomère.
      3- un troisième monomère présentant trois groupes époxyde susceptibles de réagir avec les fonctions amine du premier monomère. Ce composé peut être utilisé pour augmenter le taux de réticulation du réseau.

La synthèse peut se faire en utilisant uniquement les monomères 1 et 2 ou les monomères 1 et 3. Le choix est fixé afin de contrôler le taux de réticulation et la capacité d'échange ionique de la membrane.

Exemples de premier monomère : 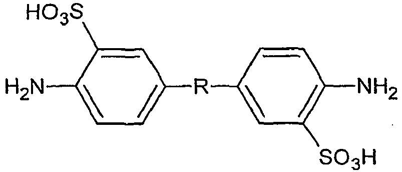 R représente

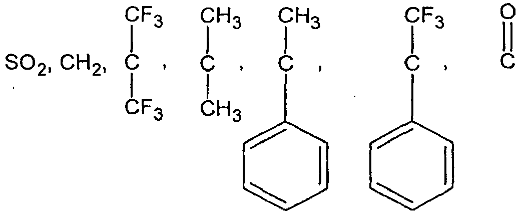

Exemples de second monomère :

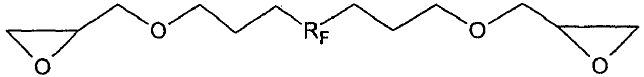

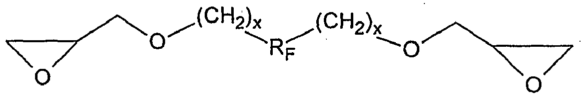

Avec x un entier allant de 1 à 11, R_{F} choisi parmi : -(CF₂)₄-, -(CF₂)₆-, - (CF₂)₄-CH₂-CH(CF₃)-, -(CF₃)CH-CH₂-(CF₂)₄-CH₂-CH(CF₃)-, -(CF₂)₄(-H₂C-CF₂-)n(-CF₂-CF(CF₃)-)m-, et n, m représentent des entiers allant de 0 à 30, avantageusement de 0 à 15, et le monomère étant de masse molaire inférieure ou égale à 6000g/mole.

Exemple de troisième monomère : 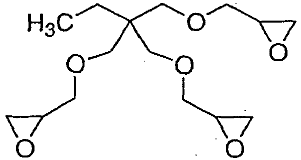 triméthylolpropane triglycidyl éther

Formation du réseau B : A titre d'exemple, des associations de monomères permettant de construire le réseau B sont décrites ci-dessous :
- Formation du réseau B par réaction alcool-isocyanate

Il est possible de réaliser le réseau B par réaction alcool-isocyanate avec :
1. un premier monomère comprenant des groupements CFₙ avec n=1 à 3, comprenant au moins deux fonctions alcool (OH),
2. un second monomère comprenant au moins trois fonctions isocyanate (NCO) pour la réticulation,
3. éventuellement un troisième monomère avec deux fonctions isocyanate (NCO),
4. un éventuel catalyseur pour accélérer la réaction.

La présence du troisième monomère dans la synthèse n'est pas indispensable. Il est utilisé pour ajuster le taux de réticulation du réseau. Le premier et le second monomère avec le catalyseur peuvent être utilisés seuls.

L'addition alcool-isocyanate est mal contrôlée en présence de groupements acide dans le réseau A en raison des nombreuses réactions secondaires. Ainsi, le proton des groupes acide du réseau A doit être remplacé par un autre contre-ion, par exemple K⁺ ou Na⁺ lors de la formation du réseau B en présence du réseau A.

Exemples de premier monomère :
- Molécule de formule générique HO(CH₂)ₓ-R_{F}-(CH₂)ₓOH,
   avec x=1,2 ou 3, R_{F} choisi parmi : -(CF₂)₄-, -(CF₂)₆-, -(CF₂)₈-, -(CF₂)₄-CH₂-CH(CF₃)-, -(CF₃)CH-CH₂-(CF₂)₄-CH₂-CH(CF₃)-,-(CF₂)₄(-H₂C-CF₂-)ₙ(-CF₂-CF(CF₃)-)ₘ-, et n, m représentent des entiers allant de 0 à 30, avantageusement de 0 à 15, et le monomère étant de masse molaire inférieure ou égale à 6000g/mole.
- Le 2,2,3,3,4,4,5,5-octafluoro-1,6-hexanediol (molécule disponible commercialement)

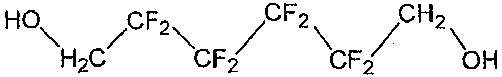

Exemples de seconds monomères :
La réticulation peut-être réalisé avec un pluri-isocyanate.
   - isocyanurate à base de diisocyanate d'hexaméthylène (commercialisé sous le nom de Desmodur N3300 ®) 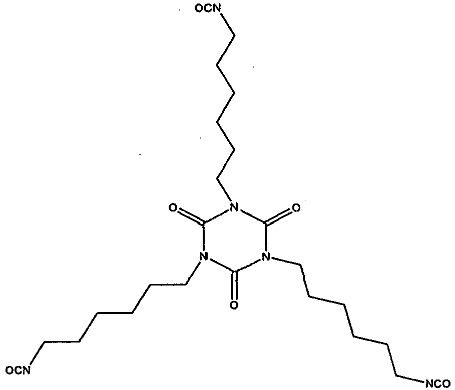
   - Triisocyanate :

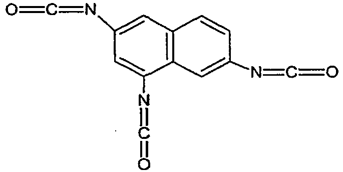

Exemples de troisièmes monomères :
- Molécule de formule générique OCN(CH₂)₃-R_{F}-(CH₂)₃NCO
   Avec R_{F} = -(CF₂)ₓ- et x = 2,4,6,8 , -(-H₂C-CF₂-)ₐ(-CF₂-CF(CF₃)-)_{b}- et (CF₃)CHCH₂-(CF₂)ₓ-[CH₂CH(CF₃)]_{b} et x = 2,4,6,8, a un entier allant de 1 à 5, b=0 ou 1.
- Toluène 2,4-diisocyanate (TDI) 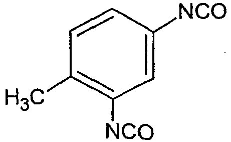
- 4,4'-Méthylènebis(phényl isocyanate) (MDI) 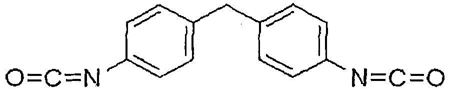
- Isophorone diisocyanate 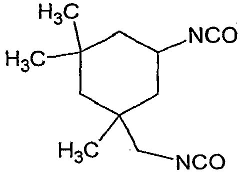
- 1,4-Phénylène diisocyanate.

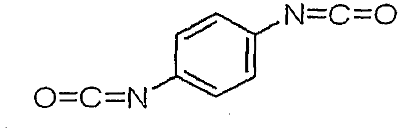

Exemples de catalyseurs :
La réaction alcool-isocyanate peut être catalysée par :
   • un catalyseur à base d'étain, tel que le dilaurate de dibutylétain (DBTDL), et la température de réaction est de l'ordre de 50°C.
   • du DABCO ou 1,4-diazabicyclo[2.2.2]octane.
   - Formation du réseau B par polymérisation radicalaire à partir de monoacrylate

Il est possible de réaliser le réseau B par copolymérisation radicalaire de monoacrylates ou monométhacrylates avec :
1/ un premier monomère comprenant des groupements CFₙ avec n=1 à 3 et une fonction acrylate (OOC-CH=CH₂) ou méthacrylate (OOC-C(CH₃)=CH₂).
2/ un second monomère avec au moins deux liaisons acrylate ou méthacrylate comme agent réticulant.
3/ un amorceur thermique ou photochimique Exemples de premier monomère :
   - acrylate de 2,2,3,3,4,4,5,5,6,6,7,7-dodécafluoroheptyl
   - acrylate 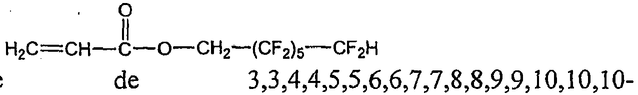 heptadécafluorodecyl
      H₂C=CHCO₂(CH₂)₂C₈F₁₇
   - acrylate de 3,3,4,4,5,5,6,6,7,7,8,8,8-tridécafluorooctyl
   - 3,3,4,4,5,5,6,6,6-nonafluoro-1-héxène H₂C=CH-(OF₂)₃-CF₃

Exemples de second monomère pour la réticulation :
- Poly(éthylène glycol) diméthacrylate 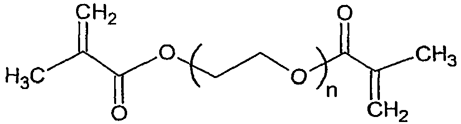 avec n un entier allant de 1 à 140

Exemples d'amorceur thermique ;
- Peroxypivalate de t-amyle (55°C)
- Tertiobutyl peroxydicarbonate de dicyclohexyle (PCDH) (60°C)
- Peroxypivalate de t-butyle (74°C)
- Azobis isobutyronitrile (AIBN) (80°C)
- Peroxyde de benzoyle (92°C)
- 2,5-bis(tertiobutylperoxy)-2,5-diméthylhexane (134°C)
- tBuO-OtBu (142°C)

La température indiquée entre parenthèse est la température d'utilisation correspondant à un temps de demi-vie d'une heure.
- Formation du réseau B par polymérisation radicalaire à partir de diacrylate

Il est possible de réaliser le réseau B par polymérisation radicalaire de diacrylate ou diméthacrylate avec :
1/ un premier monomère comprenant des groupements CFₙ avec n=1 à 3 avec deux fonctions acrylate (OOC-CH=CH₂) ou méthacrylate (OOC-C(CH₃)=CH₂).
2/ un amorceur thermique ou photochimique

Exemples de premiers monomères :
- diacrylate de 1H,1H,6H,6H-Perfluoro-1,6-hexanediol 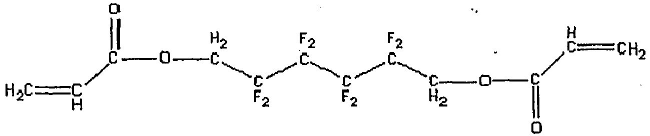
- 2,2,3,3,4,4,5,5-Octafluoro-hexanediol-1,6-diméthacrylate 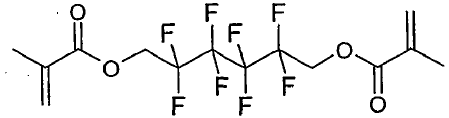
- Molécule de formule générique H₂C=CHCO₂C₂H₄-R_{F}-C₂H₄CO₂CH=CH₂

Avec R_{F} = -(CF₂)₄-, -(CF₂)₆-, -(CF₂)₄-CH₂-CH(CF₃)-, - (CF₃)CH-CH₂-(CF₂)₄-CH₂-CH(CF₃)-, -(CF₂)₄(-H₂C-CF₂-)ₙ(-CF₂-CF(CF₃)ₘ-

Et n, m, représentent un entier allant de 0 à 30, avantageusement de 0 à 15, le monomère ayant une masse molaire inférieure ou égale à 6000 g/mole.

Exemples d'amorceur thermique :
- Peroxypivalate de t-amyle (55°C)
- Tertiobutylperoxydicarbonate de dicyclohexyle (PCDH) (60°C)
- Peroxypivalate de t-butyle (74°C)
- Azobis isobutyronitrile (AIBN) (80°C)
- Peroxyde de benzoyle (92°C)
- 2,5-bis(tertiobutylperoxy)-2,5-diméthylhexane (134°C)
- tBuO-OtBu (142°C)
   - Formation du réseau B par réaction d'époxydes avec des amines :
      Le réseau B peut être réalisé à partir de diépoxydes avec :
         1/ un premier monomère comprenant des groupements CFₙ avec n=1 à 3 avec au moins deux fonctions époxydes.
         2/ un second monomère comprenant deux groupes amine (NH₂), pouvant réagir avec les groupes époxyde du premier monomère.

Exemples de premier monomère :

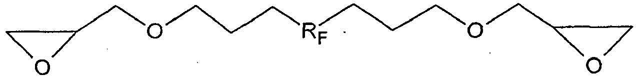

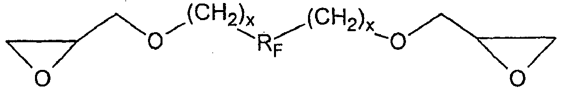

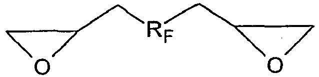

Avec x un entier allant de 1 à 11, R_{F} choisi parmi : -(CF₂)₄-, -(CF₂)₆-,-(CF₂)₄-CH₂-CH(CF₃)-, -(CF₃)CH-CH₂-(CF₂)₄-CH₂-CH(CF₃)-, -(CF₂)₄(-H₂C-CF₂-)ₙ(-CF₂-CF(CF₃)-)ₘ-, et n, m représentent un entier allant de 0 à 30, avantageusement de 0 à 15, le monomère ayant une masse molaire inférieure ou égale à 6000 g/mole.

Exemples de second monomère :
- Molécule de formule générique H₂N-(CH₂)ₓ-R_{F}-(CH₂)ₓNH₂ avec x= 2 ou 3 et dans chaque cas: R_{F} = (CF₂)_{z} avec z = 4, 6 ou 8 ; ou (CF(CF₃)CF₂)ₐ-(CH₂CF₂)_{b} avec a, b des entiers allant de 0 à 10 ; ou (CF₂)_{z} (CH₂CH(CF₃))_{c} avec c un entier allant de 0 à 10 et z = 4, 6 ou 8 ; ou CH(CF₃)CH₂-(CF₂)_{z}CH₂CH(CF₃) z = 4, 6 ou 8.
- 2,2-bis(3-amino-4-hydroxyphényl)hexafluoropropane 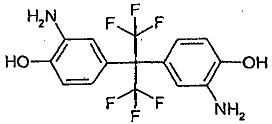
- 2,2-bis(3-amino-4-méthylphényl)hexafluoropropane 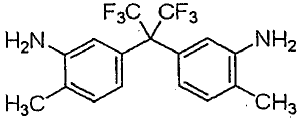
- 2,2-bis(4-aminophényl)hexafluoropropane 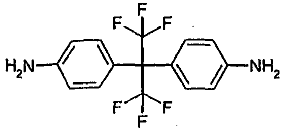
- 2,2-bis(3-aminophényl)hexafluoropropane 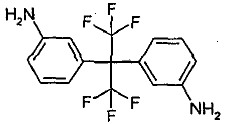
- 4-Fluoro-1,2-phénylènediamine 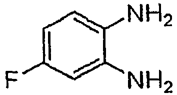
- 2,2-bis(4-(4-aminophénoxy)phényl)hexafluoropropane 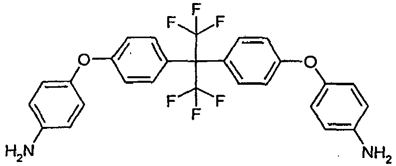
- 4-4'-bis[2-(p-aminophényl)hexafluoroisopropyl]diphényléther

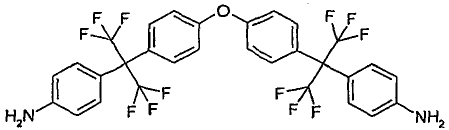

L'invention a encore pour objet un film obtenu à partir de réseaux interpénétrés de polymères tel que décrit ci-dessus par le procédé qui a été également décrit et qui est détaillé dans la partie expérimentale.

Les films de l'invention peuvent être produits par dépôt d'un mélange précurseur de RIP tel que décrit ci-dessus sur un moule, comme par exemple une plaque suivi d'une polymérisation. Dans le cas où l'on veut faire une membrane de pile à combustible, on prévoit un dépôt tel que l'épaisseur de la membrane soit compris entre 5 et 200 µm et avantageusement entre 10 et 25 µm.

De façon avantageuse, les films obtenus à partir des réseaux interpénétrés de polymères qui ont été décrits ci-dessus peuvent être utilisés pour la fabrication de membranes de piles à combustibles. Un tel film est stable mécaniquement à l'état sec ou hydraté, il est un bon conducteur protonique, il est perméable à l'eau tout en l'étant peu au méthanol, à l'hydrogène et à l'oxygène, il est isolant électronique.

Le film obtenu, supporté ou non, et acidifié ou non, peut être directement employé dans toutes les applications nécessitant une membrane échangeuse cationique, c'est-à-dire pour les piles à combustible PEMFC ou DMFC, les électrolyseurs, les capteurs, les supercapacités, les batteries, les dispositifs électrochromes...

Mais d'autres applications de ces films peuvent être envisagées : autres systèmes électrochimiques, tels que des polymères électrolytes solides conducteurs des ions lithium, et également membranes sélectives pour des procédés d'analyse chimique.

Les membranes obtenues par le procédé de l'invention présentent :
- une capacité d'échange ionique supérieure ou égale à 1mmole/g,
- des perméabilités à l'hydrogène et à l'oxygène respectivement inférieures à 5 barrer.
- une résistance mécanique améliorée : supérieure à 100 MPa à température ambiante et à l'état sec.

Cette résistance mécanique est évaluée par la mesure par analyse mécanique dynamique du module de conservation des membranes.
- une conductivité protonique supérieure ou égale à 10⁻² S/cm² à température ambiante, en immersion dans l'eau. Cette mesure est réalisée dans les conditions décrites dans Y.Sone et al., J. Electrochem. Soc., 143, n°4, 1996, 1254-1259.
- une stabilité chimique améliorée vis-à-vis de l'hydrolyse et de l'attaque aux radicaux par rapport aux polymères hydrocarbonés sulfonés de l'état de l'art. Cette stabilité chimique est évaluée par la mesure de la perte de masse après 7 jours dans le réactif de Fenton à 70°C, c'est-à-dire une solution d'eau oxygénée à 30% en masse avec une concentration en sulfate de fer de 10⁻² mol/l. On n'observe aucune perte de masse dans ces conditions.

Les membranes de l'invention sont donc plus stables mécaniquement et chimiquement que les membranes de l'art antérieur tout en présentant une conductivité protonique au moins équivalente, quelles que soient les conditions, et une perméabilité aux gaz beaucoup plus faible.

### PARTIE EXPERIMENTALE

### I- Précurseurs fluorovinyléther

Dans la partie expérimentale on a réalisé différentes membranes à partir de deux précurseurs fluorovinyléther pour le réseau A et en faisant varier le réseau B

Le précurseur nommé difluorovinyléther sulfoné présente la structure chimique suivante :

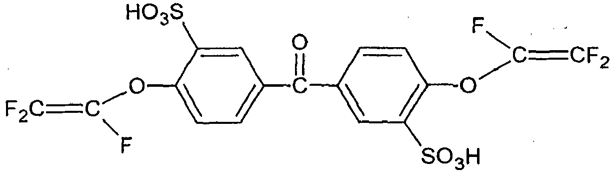

Les mêmes modes opératoires pourraient être appliqués aux autres précurseurs difluorovinyl éthers décrits ci-dessus. Il suffit de modifier les quantités de monomère de façon à avoir la capacité d'échange ionique désirée.

Le précurseur nommé dans les exemples suivants trifluorovinyléther dans la suite présente la structure chimique suivante :

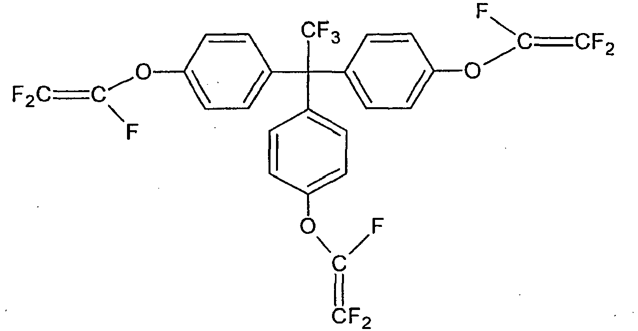

Les mêmes modes opératoires pourraient être appliqués aux autres précurseurs trifluorovinyl éthers décrits ci-dessus. Il suffit de modifier les quantités de monomères de façon à avoir la capacité d'échange ionique désirée.

Dans toutes ces synthèses les précurseurs sulfonés sont neutralisés, c'est-à-dire qu'ils ne sont pas sous forme acide. Ainsi, le groupement SO₃⁻ est associé avec un contre-ion, par exemple Na⁺.

### Exemple 1 : Précurseur monoacrylate pour le réseau fluoré B

50 mg de 2,2'-azobisisobutyronitrile (5% en masse par rapport au monomère) sont dissous dans 0,9 g d'acrylate de 3,3,4,4,5,5,6,6,7,7,8,8,8-tridécafluorooctyl et 0,1 g de diméthacrylate de poly(éthylène glycol) (Mn = 330 g.mol⁻¹). Une solution contenant 1.10⁻³ mol (0,53 g) de difluorovinyléther sulfoné, 7.10⁻⁴ mol (0,42 g) de trifluorovinyléther et 2,5 mL de diméthylacétamide est préparée. Les deux solutions sont ensuite mélangées et le mélange est placé sous agitation, sous atmosphère d'argon à température ambiante pendant 30 min. La solution obtenue est ensuite déposée par enduction à l'aide d'un couteau de 100 µm d'épaisseur sur une plaque de verre. L'ensemble est traité thermiquement pendant 15h à 60°C puis 6h à 150°C afin d'amorcer successivement les réactions de polymérisation, puis à 150°C sous vide primaire pendant 2 heures afin d'éliminer les solvants. L'ensemble est ensuite immergé dans 2L d'eau ultrapure à température ambiante pendant 24 heures afin de décoller la membrane du support en verre et d'éliminer les résidus de solvants. La membrane est ensuite échangée en l'immergeant dans 1,5 L d'H₂SO₄ 1M à 80°C pendant 1 heure. Enfin, la membrane est rincée dans l'eau ultrapure à 80°C pendant 1 heure après un premier passage dans l'eau ultrapure à température ambiante afin d'éliminer les résidus d'acide.

### Exemple 2 : Précurseur diacrylate pour le réseau fluoré B

50 mg de 2,2'-azobisisobutyronitrile (5% en masse par rapport au monomère) sont dissous dans 1 g de diacrylate de 2,2,3,3,4,4,5,5,6,6,7,7-dodécafluoro-1,8-octanediol. Une solution contenant 1.10⁻³ mol de difluorovinyléther sulfoné (0,53 g), 7.10⁻⁴ mol de trifluorovinyléther (0,42 g) et 2,5 mL de diméthylacétamide est préparée. Les deux solutions sont ensuite mélangées et le mélange est placé sous agitation, sous atmosphère d'argon à température ambiante pendant 30 min. La solution obtenue est ensuite déposée par enduction à l'aide d'un couteau de 100 µm d'épaisseur sur une plaque de verre. L'ensemble est traité thermiquement pendant 15h à 60°C puis 6h à 150°C afin d'amorcer successivement les réactions de polymérisation, puis à 150°C sous vide primaire pendant 2 heures afin d'éliminer les solvants. L'ensemble est ensuite immergé dans 2L d'eau ultrapure à température ambiante pendant 24 heures afin de décoller la membrane du support en verre et d'éliminer les résidus de solvants. La membrane est ensuite échangée en l'immergeant dans 1,5 L d'H₂SO₄ 1M à 80°C pendant 1 heure. Enfin, la membrane est rincée dans l'eau ultrapure à 80°C pendant 1 heure après un premier passage dans l'eau ultrapure à température ambiante afin d'éliminer les résidus d'acide.

### Exemple 3 : Précurseur diépoxyde pour le réseau fluoré B

1,07 g de diglycidyléther de 2,2,3,3,4,4,5,5,6,6,7,7-dodécafluoro-1,8-octanediol et 0,13 g de 2,2',2"-triaminotriéthylamine sont solubilisés dans 0,5 mL de diméthylacétamide. Une solution contenant 1,8x10⁻³ mol de difluorovinyléther sulfoné, 3,96x10⁻⁴ mol de trifluorovinyléther et 2 mL de diméthylacétamide est préparée. Les deux solutions sont ensuite mélangées et le mélange est placé sous agitation sous atmosphère d'argon à température ambiante pendant 30 min. La solution obtenue est ensuite déposée par enduction à l'aide d'un couteau de 100 µm d'épaisseur sur une plaque de verre. L'ensemble est traité thermiquement pendant 15h à 90°C puis 6h à 150°C afin d'amorcer successivement les réactions de polymérisation, puis à 150°C sous vide primaire pendant 2 heures afin d'éliminer les solvants. L'ensemble est ensuite immergé dans 2L d'eau ultrapure à température ambiante pendant 24 heures afin de décoller la membrane du support en verre et d'éliminer les résidus de solvants. La membrane est ensuite échangée en l'immergeant dans 1,5 L d'H₂SO₄ 1M à 80°C pendant 1 heure. Enfin, la membrane est rincée dans l'eau ultrapure à 80°C pendant 1 heure après un premier passage dans l'eau ultrapure à température ambiante afin d'éliminer les résidus d'acide.

### II- Précurseur diamine sulfoné

Dans la partie expérimentale on a réalisé différentes membranes à partir de deux précurseurs amines sulfonées pour le réseau A et en faisant varier le réseau B

Le précurseur nommé diamine sulfonée dans la suite présente la structure chimique suivante :

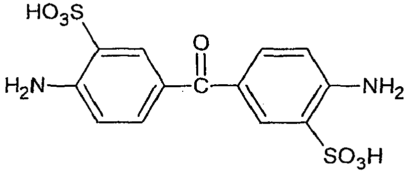

Il s'agît d'un exemple, sachant qu'il est possible d'utiliser, de la même façon, tous les premiers monomères diamines sulfonées décrits ci-dessus. Il suffit de modifier les quantités de monomères de façon à avoir la capacité d'échange ionique désirée.

Le précurseur nommé diépoxyde fluoré dans la suite présente la structure chimique suivante :

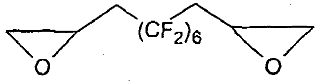

Il s'agît d'un exemple, sachant qu'il est possible d'utiliser, de la même façon, tous les monomères diépoxydes décrits ci-dessus. Il suffit de modifier les quantités de façon à avoir la capacité d'échange ionique désirée.

Dans toutes ces synthèses les précurseurs sulfonés sont neutralisés, c'est-à-dire qu'ils ne sont pas sous forme acide. Ainsi, le groupement SO₃⁻ est associé avec un contre-ion, par exemple Na⁺.

### Exemple 4 : Précurseur monoacrylate pour le réseau fluoré B

50 mg de 2,2'-azobisisobutyronitrile (5% en masse par rapport au monomère) sont dissous sous agitation dans 0,9 g d'acrylate de 3,3,4,4,5,5,6,6,7,7,8,8,8-tridécafluorooctyl, 0,1 g de diméthacrylate de poly(éthylène glycol) (Mn ≈ 330 g.mol⁻¹). Une solution 1.5x10⁻³ mol de diamine sulfonée et 9x10⁻⁴ mol de triméthylolpropane triglycidyl éther et 2,5 mL de diméthylacétamide est préparée. Les deux solutions sont ensuite mélangées et le mélange est placé sous agitation, sous atmosphère d'argon à température ambiante pendant 30 min. La solution obtenue est ensuite déposée par enduction à l'aide d'un couteau de 100 µm d'épaisseur sur une plaque de verre. L'ensemble est traité thermiquement pendant 15h à 60°C puis 6h à 120°C afin d'amorcer successivement les réactions de polymérisation, puis à 120°C sous vide primaire pendant 2 heures afin d'éliminer les solvants. L'ensemble est ensuite immergé dans 2L d'eau ultrapure à température ambiante pendant 24 heures afin de décoller la membrane du support en verre et d'éliminer les résidus de solvants. La membrane est ensuite échangée en l'immergeant dans 1,5 L d'H₂SO₄ 1M à 80°C pendant 1 heure. Enfin, la membrane est rincée dans l'eau ultrapure à 80°C pendant 1 heure après un premier passage dans l'eau ultrapure à température ambiante afin d'éliminer les résidus d'acide.

### Exemple 5 : Précurseur diacrylate pour le réseau fluoré B

50 mg de 2,2'-azobisisobutyronitrile (5% en masse par rapport au monomère) sont dissous sous agitation dans 1 g de diacrylate de 2,2,3,3,4,4,5,5,6,6,7,7-dodécafluoro-1,8-octanediol. Une solution 1.5x10⁻³ mol de diamine sulfonée et 9x10⁻⁴ mol de triméthylolpropane triglycidyl éther et 2,5 mL de diméthylacétamide est préparée. Les deux solutions sont ensuite mélangées et le mélange est placé sous agitation, sous atmosphère d'argon à température ambiante pendant 30 min. La solution obtenue est ensuite déposée par enduction à l'aide d'un couteau de 100 µm d'épaisseur sur une plaque de verre. L'ensemble est traité thermiquement pendant 15h à 60°C puis 6h à 120°C afin d'amorcer successivement les réactions de polymérisation, puis à 120°C sous vide primaire pendant 2 heures afin d'éliminer les solvants. L'ensemble est ensuite immergé dans 2L d'eau ultrapure pendant 24 heures afin de décoller la membrane du support en verre et d'éliminer les résidus de solvants. La membrane est ensuite échangée en l'immergeant dans 1,5 L d'H₂SO₄ 1M à 80°C pendant 1 heure. Enfin, la membrane est rincée dans l'eau ultrapure à 80°C pendant 1 heure après un premier passage dans l'eau ultrapure à température ambiante afin d'éliminer les résidus d'acide.

On obtient dans chacun des exemples des membranes ayant une épaisseur de l'ordre de 50 µm. Ces membranes sont flexibles et transparentes.

Les membranes obtenues sont plus stables mécaniquement et chimiquement que les membranes de l'art antérieur tout en présentant une conductivité protonique au moins équivalente quelles que soient les conditions d'utilisation et une perméabilité aux gaz beaucoup plus faible.

## Revendications

1. Réseau interpénétré de polymères, comprenant :
- un premier réseau de polymère conducteur cationique réticulé et nommé A, formé de monomères dont au moins un contient au moins un groupe aromatique fonctionnalisé par au moins un groupe échangeur de cation,
- un second réseau de polymère fluorocarboné réticulé et nommé B, formé de monomères dont au moins un contient au moins un groupement fluoré (R_{F}),
la distance entre les réseaux de polymères A et B n'excédant pas 40 nm, de préférence 10 nm.

2. Réseau interpénétré de polymères selon la revendication 1, dans lequel le réseau A résulte de la copolymérisation d'au moins deux monomères dont l'un comporte au moins un groupement aromatique et au moins un groupement échangeur de cation, choisi parmi un groupement imidazolium, et un groupement acide, tel qu'un acide carboxylique (COOH), un acide phosphonique (PO₃H), un acide sulfonique (SO₃H).

3. Réseau interpénétré de polymères selon la revendication 2, dans lequel le réseau A résulte de la copolymérisation d'au moins :
- un premier monomère avec au moins un cycle aromatique et deux fonctions polymérisables FP1 et sur au moins l'un des cycles aromatiques au moins un groupe échangeur de cation choisi parmi : un imidazolium, un acide carboxylique (COOY), un acide phosphonique (PO₃Y) et un acide sulfonique (SO₃Y), où Y est choisi parmi H, Li, Na, K, HNR₃ où R représente un groupe alkyle comprenant 1 à 5 atomes de carbone,
- un second monomère comprenant au moins deux fonctions polymérisables FP2 susceptibles de réagir avec les fonctions FP1 du premier monomère pour former une liaison covalente.

4. Réseau interpénétré de polymères selon l'une quelconque des revendications 1 à 3, dans lequel le réseau A résulte de l'une des méthodes de polymérisation suivantes :
- dimérisation de fonctions fluorovinyl éther,
- réaction de diamines sulfonées avec des monomères époxydés.

5. Réseau interpénétré de polymères selon l'une quelconque des revendications 1 à 4, dans lequel le réseau A présente un taux de réticulant compris entre 25 et 50% et une capacité d'échange ionique supérieure à 0,5 mmole/g, et de préférence supérieure à 1mmole/g.

6. Réseau interpénétré de polymères selon l'une quelconque des revendications 1 à 5, dans lequel le réseau B résulte de la copolymérisation d'au moins deux monomères dont l'un comporte des groupes CFₙ avec n=1, 2 ou 3.

7. Réseau interpénétré de polymères selon la revendication 6, dans lequel le réseau B résulte de la copolymérisation d'au moins :
- un premier monomère comprenant des groupements CFₙ avec n=1 à 3 comprenant au moins deux fonctions polymérisables FP3,
- un second monomère comprenant au moins deux fonctions polymérisables FP4, susceptibles de réagir avec les fonctions FP3 du premier monomère pour former une liaison covalente.

8. Réseau interpénétré de polymères selon l'une quelconque des revendications 1 à 7, dans lequel le réseau B résulte de l'une des méthodes de polymérisation suivantes :
- réaction alcool-isocyanate,
- polymérisation radicalaire de monoacrylates ou de monométhacrylates,
- polymérisation radicalaire à partir de diacrylates ou de diméthacrylates,
- réactions d'époxydes avec des amines.

9. Réseau interpénétré de polymères selon l'une quelconque des revendications 1 à 8, dans lequel le réseau B présente un taux de réticulant compris entre 0,1 et 100 %.

10. Réseau interpénétré de polymères selon l'une quelconque des revendications 1 à 9, dans lequel la proportion pondérale du réseau A est comprise entre 50 et 80 % par rapport à l'ensemble des deux réseaux A et B.

11. Procédé de fabrication d'un réseau interpénétré de polymères selon l'une quelconque des revendications 1 à 10, ce procédé comprenant :
(i) au moins une étape au cours de laquelle on mélange les monomères précurseurs du réseau A et les monomères précurseurs du réseau B,
(ii) au moins une étape au cours de laquelle on déclenche la polymérisation de A et la polymérisation de B.

12. Procédé selon la revendication 11, qui comporte en outre entre les étapes (i) et (ii), le dépôt du mélange dans un moule.

13. Film obtenu à partir d'un réseau interpénétré de polymères par un procédé selon l'une quelconque des revendications 11 et 12.

14. Membrane de pile à combustible comprenant un film selon la revendication 13.

15. Membrane selon la revendication 14 qui présente les propriétés suivantes :
- une capacité d'échange ionique supérieure ou égale à 1mmole/g,
- des perméabilités à l'hydrogène et à l'oxygène respectivement inférieures à 5 barrer,
- une résistance mécanique évaluée par la mesure par analyse mécanique dynamique du module de conservation des membranes supérieure à 100MPa à l'état sec et à température ambiante,
- une conductivité protonique supérieure ou égale à 10⁻² S/cm² à température ambiante et en immersion dans l'eau,
- une stabilité chimique évaluée par la mesure de la perte de masse après 7 jours dans le réactif de Fenton à 70°C, c'est-à-dire une solution d'eau oxygénée à 30% en masse avec une concentration en sulfate de fer de 10⁻² mol/l, cette perte de masse étant nulle.

## Patentansprüche

1. Interpenetrierendes Polymer-Netzwerk, umfassend:
- ein erstes Kationen leitendes Polymer-Netzwerk, das vernetzt ist und A genannt wird, das aus Monomeren gebildet ist, von denen wenigstens eins eine aromatische Gruppe enthält, die durch wenigstens eine Kationenaustauschergruppe funktionalisiert ist,
- ein zweites Fluorkohlenstoff-Polymer-Netzwerk, das vernetzt ist und B genannt wird, das aus Monomeren gebildet ist, von denen wenigstens eins wenigstens eine Fluorgruppierung (R_{F}) enthält,
wobei der Abstand zwischen den Polymer-Netzwerken A und B 40 nm, vorzugsweise 10 nm, nicht überschreitet.

2. Interpenetrierendes Polymer-Netzwerk gemäß Anspruch 1, in dem das Netzwerk A aus der Copolymerisation von wenigstens zwei Monomeren resultiert, von denen das eine wenigstens eine aromatische Gruppierung und wenigstens eine Kationenaustauschergruppierung, ausgewählt aus einer Imidazoliumgruppierung, einer Säuregruppierung wie einer Carbonsäure (COOH), einer Phosphonsäure (PO₃H), einer Sulfonsäure (SO₃H), trägt.

3. Interpenetrierendes Polymer-Netzwerk gemäß Anspruch 2, in dem das Netzwerk A aus der Copolymerisation von wenigstens:
- einem ersten Monomer mit wenigstens einem aromatischen Ring und zwei polymerisierbaren Funktionen FP1 und wobei an wenigstens einem der aromatischen Ringe wenigstens eine Kationenaustauschergruppe ist, die ausgewählt ist aus: einem Imidazolium, einer Carbonsäure (COOY), einer Phosphonsäure (PO₃Y) und einer Sulfonsäure (SO₃Y), worin Y aus H, Li, Na, K, HNR₃, worin R eine Alkylgruppe, die 1 bis 5 Kohlenstoffatome umfasst, darstellt, ausgewählt ist,
- einem zweiten Monomer, das wenigstens zwei polymerisierbare Funktionen FP2 umfasst, die geeignet sind, mit den Funktionen FP1 des ersten Monomers unter Bildung einer kovalenten Bindung zu reagieren,
resultiert.

4. Interpenetrierendes Polymer-Netzwerk gemäß einem der Ansprüche 1 bis 3, in dem das Netzwerk A aus einem der folgenden Polymerisationsverfahren resultiert:
- Dimerisierung von Fluorvinyletherfunktionen,
- Reaktion von sulfonierten Diaminen mit epoxidierten Monomeren.

5. Interpenetrierendes Polymer-Netzwerk gemäß einem der Ansprüche 1 bis 4, in dem das Netzwerk A einen Vernetzungsgrad von zwischen 25 und 50% und eine Ionenaustauschkapazität von über 0,5 mmol/g und vorzugsweise von über 1 mmol/g aufweist.

6. Interpenetrierendes Polymer-Netzwerk gemäß einem der Ansprüche 1 bis 5, in dem das Netzwerk B aus der Copolymerisation von wenigstens zwei Monomeren resultiert, von denen das eine CFₙ-Gruppen, worin n = 1, 2 oder 3, trägt.

7. Interpenetrierendes Polymer-Netzwerk gemäß Anspruch 6, in dem das Netzwerk B aus der Copolymerisation von wenigstens:
- einem ersten Monomer, umfassend Gruppierungen CFₙ mit n = 1 bis 3, umfassend wenigstens zwei polymerisierbare FP3-Gruppierungen,
- einem zweiten Monomer, umfassend wenigstens zwei polymerisierbare FP4-Funktionen, die geeignet sind, mit den FP3-Funktionen des ersten Monomers unter Bildung einer kovalenten Bindung zu reagieren,
resultiert.

8. Interpenetrierendes Polymer-Netzwerk gemäß einem der Ansprüche 1 bis 7, in dem das Netzwerk B aus einem der folgenden Polymerisationsverfahren resultiert:
- Alkohol-Isocyanat-Reaktion,
- radikalische Polymerisation von Monoacrylaten oder Monomethacrylaten,
- radikalische Polymerisation ausgehend von Diacrylaten oder Dimethacrylaten,
- Reaktionen von Epoxiden mit Aminen.

9. Interpenetrierendes Polymer-Netzwerk gemäß einem der Ansprüche 1 bis 8, in dem das Netzwerk B einen Vernetzungsgrad von zwischen 0,1 und 100% aufweist.

10. Interpenetrierendes Polymer-Netzwerk gemäß einem der Ansprüche 1 bis 9, in dem der Gewichtsverhältnisanteil des Netzwerks A zwischen 50 und 80% bezogen auf die Gesamtheit der zwei Netzwerke A und B liegt.

11. Verfahren zur Herstellung eines penetrierenden Polymer-Netzwerks gemäß einem der Ansprüche 1 bis 10, wobei dieses Verfahren umfasst:
(i) wenigstens eine Stufe, in deren Verlauf man die Monomere, die Vorläufer des Netzwerkes A sind, und die Monomere, die Vorläufer des Netzwerkes B sind, mischt,
(ii) wenigstens eine Stufe, in deren Verlauf man die Polymerisation von A und die Polymerisation von B auslöst.

12. Verfahren gemäß Anspruch 11, das außerdem zwischen den Stufen (i) und (ii) die Abscheidung des Gemisches in einer Form umfasst.

13. Film, der aus einem interpenetrierenden Polymer-Netzwerk durch ein Verfahren gemäß einem der Ansprüche 11 und 12 erhalten wird.

14. Brennstoffzellenmembran, die einen Film gemäß Anspruch 13 umfasst.

15. Membran gemäß Anspruch 14, die die folgenden Eigenschaften aufweist:
- eine Ionenaustauschkapazität von über oder gleich 1 mmol/g,
- Permeabilitäten für Wasserstoff bzw. Sauerstoff von unter 5 Barrer,
- einen mechanischen Widerstand, evaluiert durch Messung durch mechanisch-dynamische Analyse des Speichermoduls der Membranen, von über 100 MPa in trockenem Zustand und bei Umgebungstemperatur,
- eine Protonenleitfähigkeit von über oder gleich 10⁻² S/cm² bei Umgebungstemperatur und Eintauchung in Wasser,
- eine chemische Stabilität, evaluiert durch Messung des Massenverlusts nach 7 Tagen in Fenton-Reagens bei 70°C, d.h. in einer Nasserstoffperoxidlösung mit 30 Massen-% mit einer Eisensulfatkonzentration von 10⁻² mol/l, wobei dieser Massenverlust gleich null ist.

## Claims

1. Interpenetrated polymer network, comprising:
- a first cross-linked cationic conductor polymer network which is designated A and which is formed by monomers, at least one of which contains at least one aromatic group which is functionalised by at least one cation exchange group,
- a second cross-linked fluorocarbonated polymer network which is designated B and which is formed by monomers, at least one of which contains at least one fluorinated group (R_{F}),
the distance between the polymer networks A and B not exceeding 40 nm, preferably 10 nm.

2. Interpenetrated polymer network according to claim 1, wherein the network A results from the copolymerisation of at least two monomers, one of which comprises at least one aromatic group and at least one cation exchange group, selected from an imidazolium group, and an acid group, such as a carboxylic acid (COOH), a phosphonic acid (PO₃H), a sulphonic acid (SO₃H).

3. Interpenetrated polymer network according to claim 2, wherein the network A results from the copolymerisation of at least:
- a first monomer with at least one aromatic cycle and two polymerisable functions FP1 and, on at least one of the aromatic cycles, at least one cation exchange group selected from: an imidazolium, a carboxylic acid (COOY), a phosphonic acid (PO₃Y) and a sulphonic acid (SO₃Y), where Y is selected from H, Li, Na, K, HNR₃ where R represents an alkyl group comprising from 1 to 5 atoms of carbon,
- a second monomer comprising at least two polymerisable functions FP2 which are capable of reacting with the FP1 functions of the first monomer in order to form a covalent bond.

4. Interpenetrated polymer network according to any one of claims 1 to 3, wherein the network A results from one of the following polymerisation methods:
- dimerisation of fluorovinyl ether functions,
- reaction of sulphonated diamines with epoxidised monomers.

5. Interpenetrated polymer network according to any one of claims 1 to 4, wherein the network A has a level of crosslinking agent of between 25 and 50% and an ion exchange capacity greater than 0.5 mmol/g, and preferably greater than 1 mmol/g.

6. Interpenetrated polymer network according to any one of claims 1 to 5, wherein the network B results from the copolymerisation of at least two monomers, one of which comprises CFₙ groups with n = 1, 2 or 3.

7. Interpenetrated polymer network according to claim 6, wherein the network B results from the copolymerisation of at least:
- a first monomer comprising CFₙ groups with n = 1 to 3 comprising at least two polymerisable functions FP3,
- a second monomer comprising at least two polymerisable functions FP4, which are capable of reacting with the functions FP3 of the first monomer in order to form a covalent bond.

8. Interpenetrated polymer network according to any one of claims 1 to 7, wherein the network B results from one of the following polymerisation methods:
- alcohol-isocyanate reaction,
- radical polymerisation of monoacrylates or monomethacrylates,
- radical polymerisation from diacrylates or dimethacrylates,
- reactions of epoxides with amines.

9. Interpenetrated polymer network according to any one of claims 1 to 8, wherein the network B has a level of crosslinking agent of between 0.1 and 100%.

10. Interpenetrated polymer network according to any one of claims 1 to 9, wherein the weight proportion of the network A is between 50 and 80% relative to all of the two networks A and B.

11. Production method for an interpenetrated polymer network according to any one of claims 1 to 10, this method comprising:
(i) at least one step during which the precursor monomers of the network A and the precursor monomers of the network B are mixed,
(ii) at least one step during which the polymerisation of A and the polymerisation of B are initiated.

12. Method according to claim 11, which further comprises, between the steps (i) and (ii), the depositing of the admixture in a mould.

13. Film obtained from an interpenetrated polymer network by a method according to either claim 11 or claim 12.

14. Fuel cell membrane comprising a film according to claim 13.

15. Membrane according to claim 14 which has the following properties:
- an ion exchange capacity which is greater than or equal to 1 mmol/g,
- permeabilities with respect to hydrogen and oxygen which are less than 5 barrer, respectively,
- a mechanical strength which is evaluated by means of the measurement by dynamic mechanical analysis of the conservation modulus of the membranes greater than 100 MPa in the dry state and at ambient temperature,
- a proton conductivity which is greater than or equal to 10⁻² S/cm² at ambient temperature and during immersion in water,
- a chemical stability which is evaluated by means of the measurement of the loss of mass after 7 days in the Fenton's reagent at 70°C, that is to say, a solution of oxygenated water at 30% by mass with a concentration of iron sulphate of 10⁻² mol/l, this loss of mass being zero.
